## Europäisches Patentamt

## European Patent Office

## Office européen des brevets

(19)

(11) Veröffentlichungsnummer: **0 160 814**
**B1**

(12)

# EUROPÄISCHE PATENTSCHRIFT

(45) Veröffentlichungstag der Patentschrift:
10.08.88

(51) Int. Cl.⁴: **F 16 B 12/46**

(21) Anmeldenummer: **85103146.8**

(22) Anmeldetag: **19.03.85**

(54) **Verbinder, insbesondere für Möbel.**

(30) Priorität: **05.05.84 DE 3416624**

(43) Veröffentlichungstag der Anmeldung:
**13.11.85 Patentblatt 85/46**

(45) Bekanntmachung des Hinweises auf die Patenterteilung:
**10.08.88 Patentblatt 88/32**

(84) Benannte Vertragsstaaten:
**AT BE CH DE FR IT LI NL**

(56) Entgegenhaltungen:
**DE-A-2 549 202**
**DE-A-2 941 800**
**FR-A-2 515 014**
**US-A-3 692 340**

(73) Patentinhaber: **VS Vereinigte Spezialmöbelfabriken GmbH & Co., Hochhäuser Strasse 8, D-6972 Tauberbischofsheim (DE)**

(72) Erfinder: **Wiesmann, Herbert L., Spittastrasse 6, D-3250 Hameln (DE)**
Erfinder: **Leiendecker, Arno, Lindenweg 9, D-6972 Tauberbischofsheim (DE)**

(74) Vertreter: **Patentanwälte Ruff und Beier, Neckarstrasse 50, D-7000 Stuttgart 1 (DE)**

LIBER, STOCKHOLM 1988

## Beschreibung

Die Erfindung betrifft einen Verbinder für unter einem Anschlußwinkel miteinander zu verbindende Bauteile, insbesondere für Möbel bzw. zur Verleimung und/oder Versteifung, mit einem Grundkörper, der zwei im Anschlußwinkel von beispielsweise 90° zueinander stehende, zwischen einer Ober- und einer Unterseite des Grundkörpers sich erstreckende und eine Eckzone bestimmende Anschlußflächen aufweist, die insbesondere zur Holzzargenbefestigung oder dgl. ausgebildet sind bzw. von denen mindestens eine Anschlußfläche mit einer Mehrzahl von vorstehenden Formschluß-Steckgliedern versehen ist, wobei der Grundkörper an einer von der Eckzone entfernten Seite eine Diagonalfläche bildet.

Derartige Verbinder werden als Eckverbinder hauptsächlich als Konstruktionselement im Stuhl- und Tischbau zur Eckaussteifung verwendet. Im Falle von Stühlen werden solche Eckverbinder sowohl bei Stühlen mit wie auch bei solchen ohne Armlehne und bei stapelfähigen sowie nicht stapelfähigen Stühlen verwendet. Bisher bekannte Eckverbinder, nämlich sogenannte Eckklötze, wie sie z. B. durch die FR-A-2 515 014 bekanntgeworden sind, bestehen aus Holz, haben reckteckige oder quadratische Querschnitte, sind diagonal zu den Zargen liegend angebracht und sollen lediglich den Zweck erfüllen, zwei im Anschluß- oder Zargenwinkel aufeinander treffende Zargen an ihren Kopfenden zu verbinden. Soll beispielsweise der Sitzteil eines Stuhles unter Einbeziehung des jeweiligen Eckklotzes befestigt werden, so sind zusätzliche Befestigungsteile, insbesondere Beschlagteile, wie beispielsweise Stahlwinkel, erforderlich, die einerseits am Sitzteil und andererseits am Eckklotz anzuschrauben sind. Soll der Sitzteil im Abstand oberhalb der Zargen und damit der diese verbindenden Eckklötze liegen, so sind zusätzlich Distanzstücke oder Zargen erforderlich, die Abschnitte unterschiedlicher Höhe aufweisen.

Der Erfindung liegt die Aufgabe zugrunde, einen Verbinder der genannten Art zu schaffen, mit welchem auf einfache Weise und bei sehr hoher Festigkeit der von dem Verbinder getragenen Verbindung erreicht werden kann, daß mit dem Verbinder weitere, jeweils an die zugehörige Eckzone reichende Bauteile, lagefixiert werden können.

Diese Aufgabe wird bei einem Verbinder der eingangs genannten Art gemäß der Erfindung dadurch gelöst, daß über die Oberseite des Grundkörpers ein wenigstens teilweise einstückig mit diesem ausgebildetes Auflage-Distanzglied vorsteht.

Erfindungsgemäß ergibt sich eine Lösung der gestellten Aufgabe dadurch, daß ein Auflage-Distanzglied vorgesehen ist, das mit dem Grundkörper insbesondere dadurch integriert ist, daß es mit diesem einstückig ausgebildet ist. Falls vorhanden, sind für die Aufnahme der Formschluß-Steckglieder an den Zargen oder dgl. entsprechende Stecköffnungen anzubringen, so daß dann eine formschlüssige Verbindung zwischen Verbinder und Zargen hergestellt werden kann, die noch zusätzlich durch Leimung, Klebung oder dgl. fixiert werden kann. Das Distanzglied, das auch lösbar am Grundkörper angebracht und damit fakultativ einsetzbar sein kann, ermöglicht beispielsweise die Abstützung des Sitzteiles eines Stuhles, der Tischplatte eines Tisches oder, falls der Eckverbinder in anderen Bereichen eingesetzt wird, eines entsprechenden Bauteiles, wie einer Wand, sowie z. B. einer nicht sichtbaren Befestigung von Panelen. Durch die erfindungsgemäße Ausbildung ist somit zur Bewältigung der im Eckbereich eines Möbels anfallenden Erfordernisse eine extrem geringe Anzahl unterschiedlicher Einzelteile erforderlich, was auch eine wesentlich einfachere und damit kostengünstigere Fertigung ermöglicht. Des weiteren wird durch die erfindungsgemäße Ausbildung auch eine sehr gute optische Wirkung der jeweiligen Verbindung möglich. Ferner kann der Verbinder als Halter eingesetzt werden, der durch Befestigung in einer Ecke angebracht wird und dessen dann beispielsweise horizontal vorstehendes Distanzglied als Befestigungsflansch für den bzw. die zu halternden Bauteile dient.

Nach einem weiteren Merkmal der Erfindung liegt wenigstens eine Steckrichtung der Steckglieder rechtwinklig und/oder parallel zur Breitenrichtung der jeweils zugehörigen Anschlußfläche, wobei vorzugsweise die Steckglieder durch Zinkenstege von Feinzinken im Querschnitt schwalbenschwanzförmige oder ähnliche Zinken, Dübelzapfen, Spreizdübel und/oder dgl. gebildet sind. Dadurch greifen die im jeweiligen Knotenbereich zusammentreffenden Bauteile des Möbels oder dgl. in den Hauptbelastungsrichtungen formschlüssig in den Verbinder ein, und trotzdem ist eine einfache Montage möglich, wobei je nach Ausbildung auch eine klebefreie Befestigung der Anschlußfläche denkbar ist.

Zur Erhöhung der aussteifenden Wirkung des Verbinders, beispielsweise im Falle eines Zargenrahmens, sind die Steckglieder im wesentlichen über die ganze Höhe und/oder Breite der jeweiligen Anschlußfläche, insbesondere annähernd gleichmäßig, verteilt. Der Grundkörper kann infolge der mit sehr hoher Festigkeit herstellbaren Verbindung mit den Zargen oder dgl. gegenüber diesen niedriger ausgebildet sein, so daß er zur Festlegung der Höhenlage des Distanzgliedes gegenüber den Zargen in unterschiedlicher Höhenlage an den Zargen befestigt werden kann.

In weiterer Ausgestaltung der Erfindung stehen alle gleichartigen Steckglieder im wesentlichen gleich weit und/oder mehr als ein Zehntel der Höhe bzw. der Breite der Anschlußfläche über diese vor, so daß sich bei einfacher Ausbildung ein tiefes formschlüssiges Ineinandergreifen zwischen den Möbelteilen und dem Verbinder ergibt. Zweckmäßig gehen die Steckglieder im wesentlichen ununterbrochen über die Breite der Anschlußfläche durch, wodurch eine weitere Erhöhung der Aussteifungsfestigkeit erzielt werden kann. Liegen die Steckglieder parallel zur Breitenrichtung der Anschlußfläche, so können sie - je nach Ausbildung - auch oder nur in dieser Richtung in die zugehörigen Gegenglieder der Möbelteile eingesteckt werden.

Eine besonders hohe Festigkeit der Verbindung zwischen Verbinder und Bauteil läßt sich erzielen, wenn die Steckglieder und/oder die Lücken zwischen diesen jeweils zum Scheitel im Querschnitt verjüngt sind, wenn die Dicke der Steckglieder etwa gleich der Breite der Lücken ist und wenn vorzugsweise die Lücken gleiche, um 180° verdrehte Querschnitte wie die Steckglieder aufweisen. Dadurch ergibt sich in Bezug auf die aneinander anschließenden Flächen zwischen Möbelteilen und Eckverbinder eine extrem hohe Oberfläche, die insbesondere auch bei Anwendung einer Leim- oder Klebeverbindung zweckmäßig ist.

Zur weiteren Vereinfachung der Montage des Verbinders liegen die Steckglieder und/oder mindestens eine Anschlußfläche im Bereich der Eckzone des Grundkörpers im Abstand von der gedachten Schnittlinie zwischen den Ebenen der beiden Anschlußflächen, was beispielsweise dadurch errreicht werden kann, daß der Grundkörper im Bereich dieser Eckzone einspringend ausgebildet ist, beispielsweise eine über seine Höhe durchgehende, rinnenförmige Vertiefung aufweist. Dadurch reicht der Grundkörper nicht bis in die einspringende Ecke der miteinander zu verbindenden Bauteile, und es ist sichergestellt, daß seine Steckglieder und Anschlußflächen ungehindert in die zugehörigen Bauteile eingreifen können. Um diese Bauteile noch einfacher, nämlich beispielsweise durch eine den Zargenwinkel schließende Schwenkbewegung in Eingriff mit dem Verbinder bringen zu können, nehmen die Steckglieder mit zunehmender Annäherung an die genannte Schnittlinie in ihrer zur zugehörigen Anschlußfläche rechtwinkligen Höhe ab, wodurch trotz relativ hoher Eingriffstiefe und schlanker Ausbildung der Steckglieder des weiteren vermieden werden kann, daß diese Steckglieder bei der Montage leicht brechen. Dies kann zum Beispiel dadurch erreicht werden, daß die Steckglieder der jeweiligen Anschlußfläche an ihren zur Eckzone benachbarten Enden bzw. Begrenzungsflächen mit einer über die Höhe der Anschlußfläche durchgehenden gemeinsamen Abschrägung versehen sind, die insbesondere in das zugehörige Ende der Anschlußfläche übergeht und/oder flacher als 45° geneigt ist.

An dem von der Eckzone entfernten Ende der jeweiligen Anschlußfläche ist es demgegenüber vorteilhaft, wenn die Steckglieder bis an die anschließende Diagonalfläche, insbesondere mit in deren Anschlußebene liegenden Begrenzungsflächen reichen, so daß sich in Richtung zu diesem Ende eine maximale Ausdehnung der Steckglieder ergibt. Um eine zu spitzwinklige und damit gegen Bruchbelastungen empfindliche Ausbildung des Grundkörpers in den Eckbereichen zu vermeiden, an welche die Diagonalfläche anschließt, schließt die Diagonalfläche zweckmäßig an die jeweilige Anschlußfläche unter einem Winkel an, der größer als 45° ist; ist dieser Winkel kleiner als 90° und reichen die Steckglieder bis an die Anschlußebene der Diagonalfläche, so bilden die Steckglieder spitzwinklig begrenzte Endabschnitte, die trotz des Umstandes, daß sie - wie auch denkbar - in Draufsicht auf den Grundkörper an ihren zugehörigen Eckbereichen nicht abgerundet sind, gegen Bruchbelastungen relativ unempfindlich sind und sicher sowie großflächig in die anschließenden Möbelteile eingreifen. Zur Erhöhung der Festigkeit des Verbinders, sowie zur Erzielung möglichst glatter, freiliegender Flächen, gehen die beiden, beiderseits des Distanzgliedes liegenden Abschnitte der Diagonalfläche tangential in den von der Eckzone abgekehrten Teil der Umfangsfläche des Distanzgliedes über.

Eine möglichst geringe Ausladung des Verbinders bei hoher Festigkeit kann auch dadurch erreicht werden, daß die Diagonalfläche etwa rechtwinklig und/oder symmetrisch zur Mittelebene zwischen den Anschlußflächen annähernd von der Oberseite des Grundkörpers zu dessen Unterseite und annähernd bis zur Unterseite reichend, abgeschrägt ist, während die in die Anschlußflächen übergehenden Abschnitte der Diagonalfläche wenigstens annähernd etwa rechtwinklig zur jeweils zugehörigen Anschlußfläche stehen können. Die Abschrägung kann so groß gewählt werden, daß sie im unteren Bereich annähernd bis an die Anschlußflächen und/oder die der Eckzone zugekehrte Mantellinie des Distanzgliedes reicht. Zweckmäßig ist die Abschrägung in den rechtwinklig zu ihr liegenden Querschnitten mit einem verhältnismäßig großen, beispielsweise gegenüber der Breite der Diagonalfläche etwa zweifach größeren Krümmungsradius konkav gekrümmt.

Damit das Distanzglied räumlich einfach in das jeweilige Möbel einzufügen ist, weist es zweckmäßig einen Abstand von der Eckzone des Grundkörpers auf. Hierbei ergibt sich bei einerseits kompakter und andererseits sehr tragfähiger Ausbildung eine besonders vorteilhafte Ausgestaltung, wenn die der Eckzone zugekehrte Mantellinie des Distanzgliedes einen Abstand von der Schnittlinie zwischen den Ebenen der Anschlußflächen aufweist, der größer als die Hälfte des in derselben Richtung, also parallel zur Mittelebene zwischen den Anschlußflächen, gemessenen, Abstandes der entfernten Enden der Anschlußflächen und/oder der zugehörigen Begrenzungsflächen der Steckglieder von dieser Schnittlinie, insbesondere gegenüber diesem Abstand nur geringfügig, nämlich beispielsweise um etwa ein Fünftel bis ein Sechstel kleiner ist. Das Distanzglied kann demgegenüber zur Erzielung einer hohen Festigkeit und einer großen oberen Auflagefläche in Richtung dieses Abstandes ein Querschnittsmaß aufweisen, das in der Größenordnung dieses Abstandes liegt.

Eine hohe Festigkeit des Distanzgliedes bei kompakter Bauweise läßt sich auch dadurch erzielen, daß das Distanzglied etwa um die Höhe der Anschlußflächen bzw. etwa um ein Diagonalmaß seines Querschnittes über die Oberseite des Grundkörpers vorsteht. Das Distanzglied ist zweckmäßig achssymmetrisch, vorzugsweise zylindrisch ausgebildet.

Bei stapelfähigen Stühlen, Tischen oder dgl. ist bei den bekannten Ausbildungen meist unterhalb des Zargenrahmens eine Stapel-Stützhilfe aus weichem Werkstoff erforderlich, um ein Verkratzen der übereinander gestapelten Stühle und Tische durch die gegenseitige Berührung zu vermeiden. Trotzdem treten bei Stühlen mit gepolsterten Sitzen nach einer gewissen Gebrauchszeit bleibende Druckstellen an den gepolsterten Sitzoberseiten auf. Der erfindungsgemäße Verbinder kann auch so ausgebildet werden, daß wesentliche Nachteile der bekannten Stapel-Stützhilfen vermieden sind, wenn an der Unterseite des Grundkörpers ein, vorzugsweise annähernd deren ganze Fläche einnehmendes, Stapelauflager in Form eines flachen Vorsprunges vorgesehen ist, mit welchem sich das jeweils darüberliegende Möbel dann auf der Oberseite des darunter gestapelten Möbels abstützt. Eine besonders vorteilhafte Wirkung ergibt sich dabei insbesondere, wenn der Verbinder so angebracht wird, daß das Stapelauflager nur geringfügig über die Unterseite der Zargen vorsteht, so daß bei gepolsterten Sitzen das Polster nicht punktartig belastet wird, sondern außer dem Stapelauflager auch die Zargen vollflächig aufliegen und somit der Stapel-Auflagedruck auf großer Fläche verteilt wird und bleibende Druckstellen im Polster vermieden werden.

Der erfindungsgemäße Verbinder eignet sich dazu, ohne zusätzliche Hilfsmittel, wie Schrauben oder dgl., allenfalls nur durch Klebung und damit sehr einfach montiert zu werden. Sollen jedoch erhöhte Belastungen aufgefangen werden, so ist es auch möglich, zusätzliche Hilfsmittel einzusetzen und hierfür mindestens ein Befestigungsglied am oberen Ende des Distanzgliedes vorzusehen. Dieses Befestigungsglied, das vorzugsweise in der zur Schnittlinie zwischen den Ebenen der Anschlußflächen parallelen Mittelachse des Distanzgliedes liegt oder im Falle mehrerer Einzelbefestigungsglieder etwa gleichmäßig über die Stirnfläche und/oder einen Längsabschnitt des Distanzgliedes verteilt ist, kann beispielsweise ein einteilig mit dem Distanzglied ausgebildeter Krallenzapfen sein, der in eine gegenüber seinem Außendurchmesser geringfügig kleinere Bohrung in der Unterseite des Sitzteiles, der Tischplatte oder dgl.

eingepreßt wird, und sich dabei nach Art eines mit widerhakenartigen Vorsprüngen versehenen Dübels in der Bohrungswand formschlüssig und unlösbar verspannt; zusätzlich oder stattdessen kann das Distanzglied am Umfang auch mit einer Ringverzahnung versehen sein. Das Befestigungsglied kann aber auch lediglich eine Schraubendurchgangsbohrung sein, so daß unter Zuhilfenahme einer Holzschraube oder dgl. ein Festschrauben der oberen Wandung des Distanzgliedes gegen die Unterseite des Sitzteiles, der Tischplatte oder dgl. möglich ist. Des weiteren kann die Stirnfläche des Distanzgliedes als Klebefläche ausgebildet sein und/oder die Stirnwand kann Durchgangslöcher oder hinterschnittene, d.h. zum Lochgrund erweiterte Sacklöcher aufweisen, durch welche Klebstoff durchtritt bzw. in welche er eintritt und nach Aushärtung nietartig formschlüssige Befestigungszapfen bildet.

Insbesondere, wenn der Verbinder an Möbeln eingesetzt werden soll, die für eine Reihenmöblierung, beispielsweise für eine Reihenbestuhlung, geeignet sein sollen, ist es des weiteren möglich, den Verbinder so auszubilden, daß in ihn die Funktion der formschlüssigen Verbindung benachbarter, Möbel integriert ist. Bei einer vorteilhaften Ausführungsform trägt in diesem Fall der Verbinder ein Reihenverbindungsglied, das vorzugsweise durch einen Radialarm des Distanzgliedes gebildet ist und am freien Ende einen Anschlußstecker mit parallel zur Schnittlinie zwischen den Ebenen der Anschlußflächen liegender Steckrichtung aufweist, welcher dann mit einem entsprechenden, komplementär ausgebildeten Anschlußstecker des benachbarten Möbels zu verbinden ist. Das Reihenverbindungsglied kann einstückig, beispielsweise durch Anspritzen, mit dem Verbinder ausgebildet sein. Es ist aber auch denkbar, das Reihenverbindungsglied auf dem Distanzglied um eine zu seiner Steckachse parallele Achse drehbar zu lagern, so daß es im Nichtgebrauchsfalle unter die Oberseite des Möbels, beispielsweise unter den Sitzteil, geschwenkt werden kann.

Zur Erzielung einer leichten Bauweise bei hoher Festigkeit, ist der Verbinder als im wesentlichen einstückiger, verrippter Hohlkörper aus Kunststoff, Druckguß oder dgl. ausgebildet, wobei vorzugsweise der Grundkörper im wesentlichen nach oben und das den Grundkörper wenigstens annähernd über seine Höhe durchsetzende Distanzglied an der Unterseite offen sind. Der Verbinder kann aber auch aus Eisen- und Nicht-Eisen-Metallen, beispielsweise durch zerspanende Bearbeitung oder als Druckgußteil, hergestellt werden. Des weiteren ist es denkbar, den Eckverbinder in zwei gesonderten Hälften herzustellen, die dann durch Steckverbindung und/oder Kleben und/oder Schweißen oder dgl. verbunden werden, wobei die Teilungsebene zweckmäßig etwa in der Mitelebene zwischen den Anschlußflächen liegt.

Der erfindungsgemäße Verbinder, der eine hohe gestalterische Freiheit im Möbelbau ermöglicht, kann so ausgebildet werden, daß mit gleichen oder ähnlichen Eckverbindern Stühle, Tische, Kastenmöbel oder jegliche Art von Bauelementen von unterschiedlicher Größe und für unterschiedliche Zwecke zusammengebaut werden können.

Die Erfindung wird im folgenden mit weiteren Einzelheiten an Hand der in den Zeichnungen dargestellten Ausführungsbeispiele näher erläutert. Es sind dargestellt in

Fig. 1 ein erfindungsgemäßer Verbinder in Draufsicht,

Fig. 2 ein Schnitt nach der Linie II-II in Fig. 1, um 45° verdreht dargestellt,

Fig. 3 der Verbinder gemäß den Fig. 1 und 2 in Ansicht auf eine Anschlußfläche,

Fig. 4 ein Anwendungsbeispiel für den Verbinder gemäß den Fig. 1 bis 3, in Ansicht parallel zu einer Zarge und in vereinfachter Darstellung des Verbinders,

Fig. 5 bis 7 drei weitere Anwendungsbeispiele in Darstellungen entsprechend Fig. 4,

Fig. 8 bis 10 drei weitere Ausführungsformen von Verbindern in Darstellungen entsprechend den Fig. 4 bis 7,

Fig. 11 eine weitere Ausführungsform in einer Darstellung entsprechend den Fig. 8 bis 10,

Fig. 12 die Ausführungsform gemäß Fig. 11 in Draufsicht,

Fig. 13 und 14 eine weitere Ausführungsform in Darstellungen entsprechend den Fig. 11 und 12,

Fig. 15 ein Ausschnitt auf einen unter Verwendung erfindungsgemäßer Verbinder aufgebauter Stuhl in Draufsicht,

Fig. 16 der Stuhl gemäß Fig. 15 in Seitenansicht und

Fig. 17 der Stuhl gemäß den Fig. 15 und 16 in Vorderansicht, jedoch links und rechts der vertikalen Mittelebene mit unterschiedlichen Sitz- und Rückenlehnenteilen.

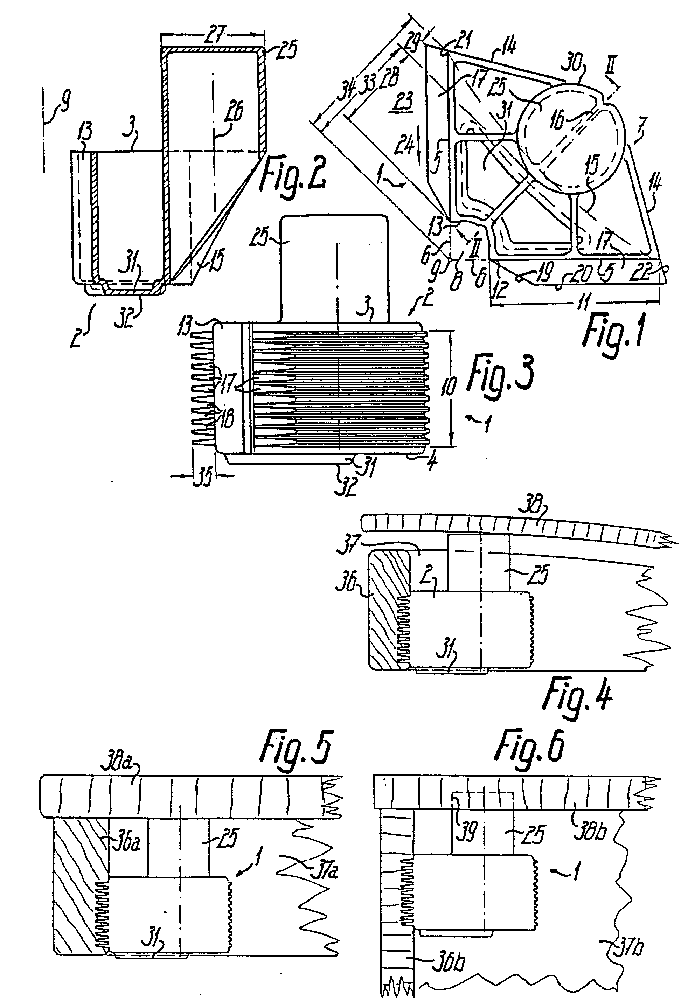

Wie die Figuren 1 bis 3 zeigen, weist ein erfindungsgemäßer, als Eckverbinder ausgebildeter Verbinder 1 einen Grundkörper 2 mit zueinander parallelen, im wesentlichen ebenen Ober- und Unterseiten 3, 4, zwei rechtwinklig zu diesen und im dargestellten Ausführungsbeispiel rechtwinklig zueinander stehenden, jeweils durchgehend in einer Ebene 6 liegenden , als Eckanschlußflächen vorgesehenen Anschlußflächen 5 sowie einer diese an der von der Eckzone 8 abgekehrten Seite verbindenden, von der ebenen Ausbildung abweichenden Diagonalfläche 7 auf. Die beiden Ebenen 6, in welchen die Anschlußflächen 5 liegen, treffen in der gedachten Schnittlinie 9 aufeinander. Der Grundkörper 2 ist an seinen an die Oberseite 3 und an die Unterseite 4 anschließenden Kanten viertelkreisförmig mit einem Radius von wenigen Millimetern abgerundet. Dadurch reichen die Anschlußflächen 5 nicht ganz bis zur Oberseite 3 bzw. zur Unterseite 4, sondern haben einen geringen Abstand von diesen. Die Höhe 10 der

Anschlußflächen 5 ist etwa um ein Drittel kleiner als deren Breite 11, die beispielsweise etwa 55 mm betragen kann. Der Abstand des jeweils der Schnittlinie 9 zugekehrten Endes 12 jeder Anschlußfläche 5 von dieser Schnittlinie 9 ist geringfügig kleiner als etwa ein Viertel der Breite 11. Dies wird dadurch erreicht, daß der Grundkörper 2 im Bereich der Eckzone 8 mit einer über seine Höhe durchgehenden, rinnenförmigen Vertiefung 13 versehen ist, deren Breite etwa ein Drittel der Breite 11 entspricht und die im dargestellten Ausführungsbeispiel im Querschnitt V-förmig mit rechtwinklig zueinander und zu den Anschlußflächen 5 liegenden V-Schenkeln und konkav ausgerundeter V-Spitze ausgebildet ist.

Die Diagonalfläche 7 weist drei voneinander abgesetzte und im Winkel zueinander stehende Abschnitte 14, 15 auf, von welchen die beiden Abschnitte 14, die über die ganze Höhe an die Anschlußflächen 5 anschließen, eben und in Ansicht annähernd rechtwinklig dreieckförmig sind. Diese Abschnitte 14 gehen in Draufsicht gemäß Fig. 1 spitzwinklig bzw. unter einem Winkel von geringfügig weniger als 90°, beispielsweise etwa 85°, in die jeweils zugehörige Anschlußfläche 5 über und liegen ebenso wie der Abschnitt 15 und die Anschlußflächen 5 symmetrisch zur winkelhalbierenden Mittelebene 16 zwischen den beiden Anschlußflächen 5, wobei der gesamte Verbinder 1 spiegelsymmetrisch zu dieser Mittelebene 16 ausgebildet sein kann. In Richtung zu dieser Mittelebene 16 nehmen die Abschnitte 14 jeweils durch eine schräg von der Anschlußfläche 5 nach oben verlaufende untere Begrenzungskante in der Höhe stetig ab, wobei diese Begrenzungskanten die Übergangskanten zum mittleren Abschnitt 15 bilden.

An jeder Anschlußfläche 5 ist eine Vielzahl von Formschluß-Steckgliedern 17 vorgesehen, die im dargestellten Ausführungsbeispiel sogenannte stegförmige Feinzinken sind. Alle Feinzinken sind gleich ausgebildet, haben gleiche Abstände voneinander, liegen jeweils parallel zur Breitenrichtung der zugehörigen Anschlußfläche 5, haben mit 8 mm eine Höhe 35, die etwa ein Siebtel der Breite 11 entspricht und gehen jeweils ununterbrochen über die ganze Breite der zugehörigen Anschlußfläche 5 durch. Die Lücken 18 zwischen den Steckgliedern 17 haben gleiche Querschnitte wie diese, wobei die Steckglieder 17 im Querschnitt spitzwinklig trapezförmig mit einer Basisbreite um 2 mm und einer Scheitelbreite um 1 mm ausgebildet sind. Das jeweils oberste und unterste Steckglied 17 liegt unmittelbar benachbart zur oberen bzw. unteren Begrenzung der zugehörigen Anschlußfläche 5, während die dazwischen liegenden Steckglieder 17 gleichmäßig zwischen diesen beiden äußersten Steckgliedern verteilt sind. An ihren der Eckzone 8 zugekehrten Enden sind die Steckglieder jeweils durch eine durchgehende, parallel zur Höhenrichtung des Grundkörpers liegende Abschrägung 19 in der Höhe abnehmend ausgebildet, wobei die Abschrägung 19 zu den anschließenden übrigen, jeweils in einer zur zugehörigen Anschlußfläche 5 parallelen Ebene liegenden Scheitelflächen 20 unter einem sich zum Grundkörper öffnenden stumpfen Winkel von etwa 150° liegt, derart, daß die beiden Abschrägungen 19 beiderseits der Eckzone 8 unter einem gleich großen Winkel, nämlich einem Winkel von 150°, zueinander stehen. Die Abschrägungen 19 gehen jeweils in das Ende 12 der zugehörigen Anschlußfläche 5 über, d.h. daß die Höhe der Steckglieder 17 an diesem Ende gleich Null ist. An den von der Eckzone 8 abgekehrten Enden 21 der Anschlußflächen 5 reichen die Steckglieder 17 auf voller Höhe bis an die Diagonalfläche 7, wobei die Steckglieder 17 an diesen Enden Begrenzungsflächen 22 aufweisen, welche in der Ebene des jeweils zugehörigen Abschnittes 14 der Diagonalfläche 7 liegen und in diesen Abschnitt kontinuierlich übergehen. Die Steckglieder 17 sind daher im Bereich der Diagonalfläche 7 in Draufsicht gemäß Fig 1 entsprechend dem Winkel spitzwinklig begrenzt, mit welchem der jeweils zugehörige Abschnitt 14 der Diagonalfläche 7 in die anschließende Anschlußfläche 5 übergeht. In Ansicht auf die jeweilige Anschlußfläche 5 stehen somit die Steckglieder 17 an der von der Eckzone 8 abgekehrten Seite über den Grundkörper 2 in Breitenrichtung der Anschlußflächen 5 vor.

Durch die beschriebene Ausbildung können die Steckglieder, von denen im dargestellten Ausführungsbeispiel jeweils elf an jeder Anschlußfläche 5 vorgesehen sind, rechtwinklig zu ihrer Längsrichtung bzw. rechtwinklig zur jeweils zugehörigen Anschlußfläche 5 gemäß Pfeil 23 in Steckeingriff mit einem mit einer entsprechenden komplementären Profilierung versehenen Möbelteil oder einen anderen Bauteil aus beliebigem Werkstoff gebracht werden. Sie können aber auch in beiden Richtungen parallel zu ihrer Längsrichtung, d.h. in Breitenrichtung der jeweils zugehörigen Anschlußfläche 5 gemäß Pfeil 24, in Eingriff mit dieser komplementären Profilierung gebracht werden. Außerdem können sie um die Eckkante zwischen der jeweiligen Abschrägung 19 und der zugehörigen Scheitelfläche 20 schwenkend in die komplementäre Gegenprofilierung eingefügt werden. Die Oberflächen der Steckglieder 17 bzw. die Innenflächen der Lücken 18 und/oder die Stirnfläche eines Distanzgliedes 25 sind zweckmäßig gegenüber den übrigen Oberflächen des Verbinders rauher ausgebildet so daß sie als mit einer Klebeschicht haftend zu sichernde Klebeverbindungsflächen besonders geeignet sind. Die Bodenflächen der Lücke 18 sind durch die jeweilige Anschlußflächen 5 gebildet.

An der zur Diagonalfläche 7 benachbarten Seite weist der Grundkörper 1 das einstückig mit ihm ausgebildete, über seine Oberseite 3 vorstehendes Auflage- bzw. Anschluß-Distanzglied 25 auf, dessen Mittelachse 26 parallel zur Schnittlinie 9 steht bzw. in der Mittelebene 16 liegt. Das parallel zur Mittelebene 16 gemessene Querschnittsmaß 27 des Distanzgliedes 25, das im Falle der dargestellten zylindrischen Ausbildung des Distanzgliedes 25 dessen Außendurchmesser ist, liegt etwa in der Größenordnung des Abstandes, den das Distanzglied 25 in Richtung parallel zur Mittelebene 16 von der Schnittlinie 9 hat. Der Abstand 28 zwischen der der Eckzone 8 zugekehrten Begrenzung des Distanzgliedes 25 und der Begrenzung des Grundkörpers 2 im Bereich der Eckzone 8 ist mehrfach, nämlich etwa vier- bis fünffach größer als der in derselben Richtung gemessene Abstand 29, den eine gedachte Gerade von der genannten Begrenzung des Distanzgliedes 25 hat, welche die von der Eckzone 8 abgekehrten Ecken zwischen den Scheitelflächen 20 und den Begrenzungsflächen 22 in Draufsicht gemäß Fig. 1 verbindet und welche auf der von der Eckzone 8 abgekehrten Seite der genannten Begrenzung des Distanzgliedes 25 liegt. Die Abschnitte 14 der Diagonalfläche 7 gehen benachbart zur Mittelebene 16 in Draufsicht gemäß Fig. 1 tangential in die Umfangsfläche 30 des Distanzgliedes 25 über. Unmittelbar unterhalb der Oberseite 3 des Grundkörpers 2 beginnt im Bereich der Mittelebene 16 der abgeschrägte mittlere Abschnitt 15 der Diagonalfläche 7, der nach unten dreieckförmig stetig derart verbreitert ist, daß er im Bereich der Unterseite 4 annähernd bis an die Enden 21 der Anschlußfläche 5 reicht. Das Distanzglied 25 durchsetzt den Grundkörper 2 auf dessen ganzer Höhe, so daß auch das untere Ende des Distanzgliedes 25 entsprechend abgeschrägt ist.

Durch den mittleren Abschnitt 15 der Diagonalfläche 7 ist die zur Oberseite 3 parallele Unterseite 4 des Grundkörpers 2 annähernd rechtwinklig bzw. gleichschenklig dreieckförmig ausgebildet, wobei sie lediglich im Bereich der Eckzone 8 entsprechend der Vertiefung 13 an der Dreiecksspitze ausgespart ist. Über diese Unterseite steht ein Stapelauflager 31 vor, das durch eine flache, über die Unterseite 4 vorstehende Erhebung mit zur Unterseite 4 paralleler bzw. zur Mittelebene 16 rechtwinkliger Unterfläche 32 gebildet ist. Das Stapelauflager 31 ist gegenüber den Begrenzungskanten der Unterseite 4 des Grundkörpers 2 nur geringfügig zurückversetzt, so daß es verhältnismäßig großflächig ist. Seine Höhe beträgt jedoch nur einen Bruchteil der Höhe des übrigen Grundkörpers 2.

Wie die Figuren 1 und 2 ferner zeigen, ist der Eckverbinder 1 als verrippter Hohlblock ausgebildet, der im wesentlichen aus die Eckanschlußflächen 5, die Diagonalfläche 7, die Vertiefung 13 und die Unterseite 4 einschließlich des Stapelauflagers 31 bildenden, einteilig miteinander ausgebildeten dünnen Wandungsabschnitten von beispielsweise etwa 2 mm Wandstärke aufgebaut ist. Das Distanzglied 25 ist im wesentlichen durch einen an der oberen Stirnwand mit geringer Wölbung nach oben geschlossenen Hohlzylinder gebildet, welcher an seiner der Eckzone 8 zugekehrten Mantelseite bis an die Unterseite 4 des Grundkörpers reicht und im Bereich seines zwischen den Abschnitten 14 der Diagonalfläche 7 liegenden Mantelteiles mit drei beispielsweise radialen Rippen gegenüber den die Anschlußflächen 5 bildenden Wandungsteilen und dem die Vertiefung 13 bildenden Wandungsteil versteift ist. Über die Höhe des an der Unterseite bzw. im Abschnitt 15 der Diagonalfläche 7 offenen Distanzgliedes 25 geht eine Axialrippe durch, welche symmetrisch zur Mittelebene 16 im Distanzglied 25 liegt. Durch die beschriebene Bauweise hat der Verbinder 1 bei extrem hoher Festigkeit ein sehr geringes Gewicht. In Fig. 1 sind des weiteren der Abstand 33 zwischen der der Eckzone 8 zugekehrten Mantellinie des Distanzgliedes 25 und der Schnittlinie 9 sowie der in derselben Richtung gemessene Abstand 34 zwischen den hinteren Enden 21 der Anschlußflächen 5 und der Schnittlinie 9 erkennbar.

In den Figuren 4 bis 6 ist erkennbar, wie gleiche, beispielsweise entsprechenden Figuren 1 bis 3 ausgebildete Verbinder im Möbelbau für unterschiedliche Zwecke und mit unterschiedlichen Techniken eingesetzt werden können. Beim Ausführungsbeispiel nach Fig. 4 werden durch den Verbinder 1 zwei im rechten Winkel zueinander liegende Sitzteil-Zargen 36, 37 miteinander verbunden, wobei die insgesamt vier, mit Abstand unterhalb des plattenförmigen Sitzteiles 38 des Stuhles vorgesehenen Zargen mit vier in den vier Eckbereichen des durch sie gebildeten Zargenrahmens angeordnete Verbinder 1 miteinander verbunden werden. Im Bereich der aneinander stoßenden Enden werden die beiden Zargen 36, 37 jeweils an den aufrechten Innenflächen mit Feinzinkenprofilierungen versehen, welche den Steckgliedern 17 und den dazwischen liegenden Lücken 18 der Verbinder 1 entsprechen. Im dargestellten Ausführungsbeispiel werden diese Profilierungen im unteren Bereich der Querschnittshöhe der Zargen 36, 37 angebracht. In diese Gegenprofilierungen wird der Verbinder 1 mit seinen an den Anschlußflächen 5 vorgesehenen Steckgliedern 17 eingesetzt und beispielsweise durch Klebung gesichert. Der Querschnitt der Zargen 36, 37 ist, beispielsweise etwa um die Hälfte, höher als die Höhe des Grundkörpers 2 des Verbinders 1. Dennoch steht das Distanzglied 25 geringfügig über die Oberseiten der Zargen 36, 37 vor und dient mit seiner oberen Stirnfläche als Auflager für den Sitzteil 38. Das Stapelauflager 31 steht geringfügig über die Unterseiten der Zargen 36, 37 vor und bildet gemeinsam mit deren unteren Flächen ein Stapelauflager. Im Falle der Anwendung gemäß Fig. 5 dienen die Verbinder 1 zur rahmenartigen Verbindung der Zargen 36a, 37a eines Tisches, wobei auf den Zargen eine Tischplatte 38a aufliegt. Der Verbinder 1 ist in der Höhe gegenüber den Zargen 36a, 37a so angeordnet, daß die Tischplatte 38a außer auf den Oberseiten der Zargen auch auf der oberen Stirnfläche des Distanzgliedes 25 aufliegt, wobei auch in diesem Falle die Stapelauflager 31 geringfügig über die Unterseiten der Zargen 36a, 37a vorstehen. Im Falle der Anwendung gemäß Fig. 6 dienen Verbinder 1 zur Verbindung der aufrechten Wände 36b, 37b eines Möbelkorpus' und einer horizontalen Platte 38b, die eine Deckplatte, eine Zwischenplatte, eine Bodenplatte oder dgl. sein kann. Bei diesem Ausführungsbeispiel ist in der dem Verbinder 1 zugekehrten Oberfläche dieser Platte 38b eine Sacklochbohrung 39 vorgesehen, in welche das freie Ende des Distanzgliedes 25, beispielsweise mit geringer Pressung, eingesetzt ist. Bei den Ausführungsformen gemäß den Figuren 4 und 5 sind demgegenüber keine zusätzlichen Bohrungen bzw. Hilfsmittel erforderlich.

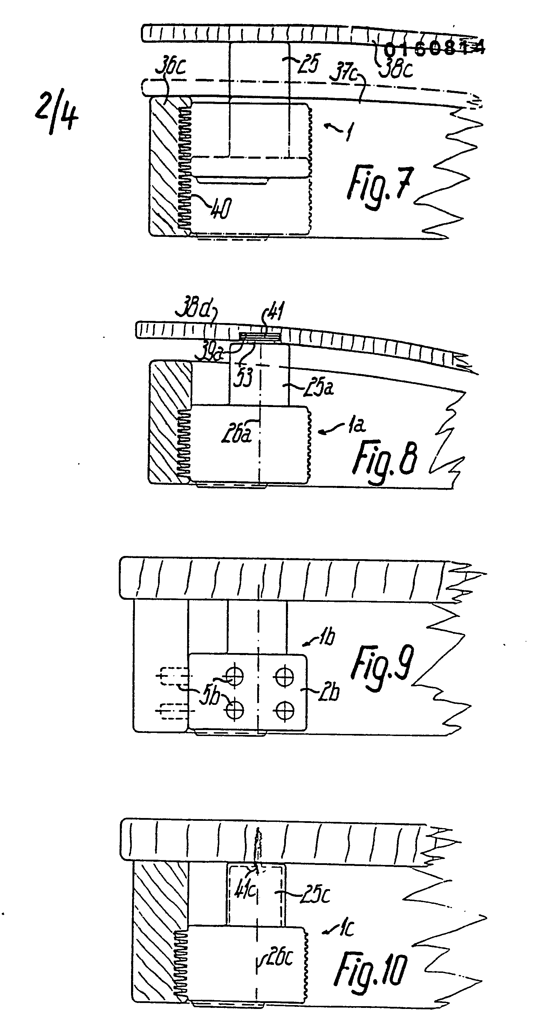

Wie Fig. 7 zeigt, können die Zargen 36c, 37c auch über eine der Höhe 10 der Anschlußflächen 5 größere, nämlich beispielsweise wenigstens annähernd über ihre ganze Höhe 10 in einem dem Höhenraster der Steckglieder 17 des Verbinders 1 entsprechenden Raster mit Gegengliedern 40 für die Steckglieder 17, im dargestellten Ausführungsbeispiel mit gleichmäßig über die Höhe verteilten Feinzinken versehen werden. Dadurch ist es möglich, den Verbinder 1 zwischen einer tiefsten, in Fig. 7 strichpunktiert angedeuteten und einer höchsten, in Fig. 7 mit ausgezogenen Linien dargestellten Lage oder in jeder Zwischenlage zwischen diesen beiden Endlagen anzuordnen, wobei die Abstände zwischen benachbarten Lagen durch den Verhältnismäßig feinen Raster der Feinzinken sehr klein sind, nämlich beispielsweise etwa im Bereich von 3,5 mm liegen. Entsprechend fein läßt sich damit das Distanzglied 25 in der Höhe verstellen, so daß das aufliegende Möbelteil, im dargestellten Ausführungsbeispiel ein Sitzteil 38c, zwischen einer tiefsten, in Fig. 7 strichpunktiert angedeuteten Stellung, in welcher es auf den Oberseiten der Zargen 36c, 37c aufliegt, und einer höchsten, in Fig. 7 mit ausgezogenen Linien dargestellten Stellung justiert werden kann.

Der Verbinder 1a gemäß Fig. 8 unterscheidet sich von demjenigen nach den Figuren 1 bis 7 vor allem dadurch, daß an der oberen Stirnwand des Distanzgliedes 25a ein gegenüber dessen Durchmesser geringfügig reduzierter und in der Mittelachse 26a liegender Krallenzapfen 41 vorgesehen ist, der beispielsweise durch einstückige Ausbildung mit dem Distanzglied 25a baulich vereint ist und durch entsprechende Umfangsnuten im Querschnitt sägezahnförmig mit zum Distanzglied 25a gerichteten Zahnspitzen ausgebildet ist. Dem Krallenzapfen entsprechend kann auch der Umfang des Distanzgliedes ausgebildet sein. Für den Krallenzapfen 41, der über einen im Durchmesser reduzierten Schaft 53 in das Distanzglied 25a übergeht und eine gegenüber seinem Durchmesser wesentlich geringere Höhe aufweist, wird in der Unterseite des aufzulegenden Möbelteiles 38d eine Sacklochbohrung 39a angebracht, die einen gegenüber dem Außendurchmesser des Krallenzapfens 41 geringfügig kleineren Durchmesser und etwa gleiche Höhe wie der Krallenzapfen 41 aufweist. Durch Einpressen bzw. Eindrücken des Krallenzapfens 41 in diese Sacklochbohrung 39a erfolgt eine formschlüssige und feste Verbindung zwischen dem Verbinder 1a und dem Möbelteil 38d.

Der Verbinder 1b kann auch gemäß Fig. 9 statt Feinzinken als Steckglieder 5b Dübelzapfen aufweisen, die zweckmäßig in einem geeigneten Raster über die jeweils zugehörige Anschlußfläche verteilt sind. Im dargestellten Ausführungsbeispiel weist jede Anschlußfläche vier mit ihren Mittelachsen an den Ecken eines gedachten Rechteckes angeordnete Steckglieder 5b auf, die in Breitenrichtung der jeweiligen Anschlußfläche größeren Abstand als in der Höhenrichtung voneinander haben und deren Länge kleiner als doppelt so groß wie ihr Durchmesser ist; der Durchmesser der jeweils rechtwinklig zur zugehörigen Anschlußfläche liegenden zylindrischen Steckglieder 5b liegt zweckmäßig in der Größenordnung von einem Viertel der Höhe der Anschlußfläche.

Der Verbinder 1c gemäß Fig. 10 weist in der Stirnwand des Distanzgliedes 25c ein Befestigungsgleid in Form einer Durchgangsbohrung 41c für eine Holzschraube oder dgl. auf, mit welcher er gegen die Unterseite des aufzulegenden Möbelteiles verspannt werden kann, so daß besonders hohe Belastungen aufgefangen werden können.

Wie die Figuren 11 und 12 zeigen, kann der Verbinder 1d auch mit einem Reihenverbindungsglied 42 baulich vereint werden. Im dargestellten Ausführungsbeispiel ist das Reihenverbindungsglied 42 durch einen einteilig mit dem Distanzglied 25d ausgebildeten Radialarm 43 gebildet, der in Höhenrichtung des Distanzgliedes 25d verhältnismäßig flache Querschnitte aufweist, so daß er zwischen dem aufliegenden Möbelteil 38d und der zugehörigen, mit Abstand darunter liegenden seitlichen Zarge 36d an die Außenseite des Möbels ragen kann. Am freien Ende des Radialarmes 43 weist das Reihenverbindungsglied 42 einen Anschlußstecker 44 auf, dessen Steckrichtung parallel zur Mittelachse 26d des Distanzgliedes 25d bzw. vertikal liegt. Der Anschlußstecker 44 kann so ausgebildet sein, daß er mit gleichartigen Anschlußsteckern zusammengesteckt werden kann, oder er kann, wie in den Figuren 11 und 12 dargestellt, als Zapfenstecker ausgebildet sein, der in eine entsprechende komplementäre Steckerbuchse 45 des benachbarten Reihenverbindungsgliedes 42 paßt. Im dargestellen Ausführungsbeispiel weist der Anschlußstecker 44 gleiche Höhe wie der Radialarm 43 auf und ist durch einen annähernd vollkreisförmigen Steckkopf am freien Ende des Radialarmes 43 gebildet; die Steckerbuchse ist demgegenüber durch eine über die Höhe des zugehörigen Reihenverbindungsgliedes 42 reichende, annähernd vollkreisförmig begrenzte Öffnung am freien Ende des zugehörigen Reihenverbindungsgliedes 42 gebildet.

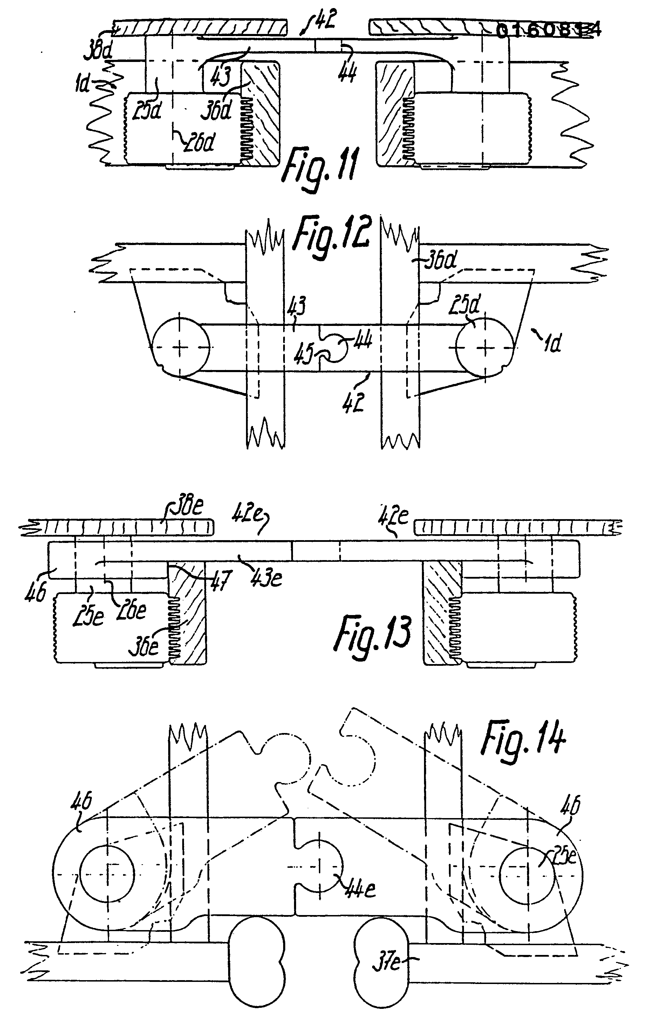

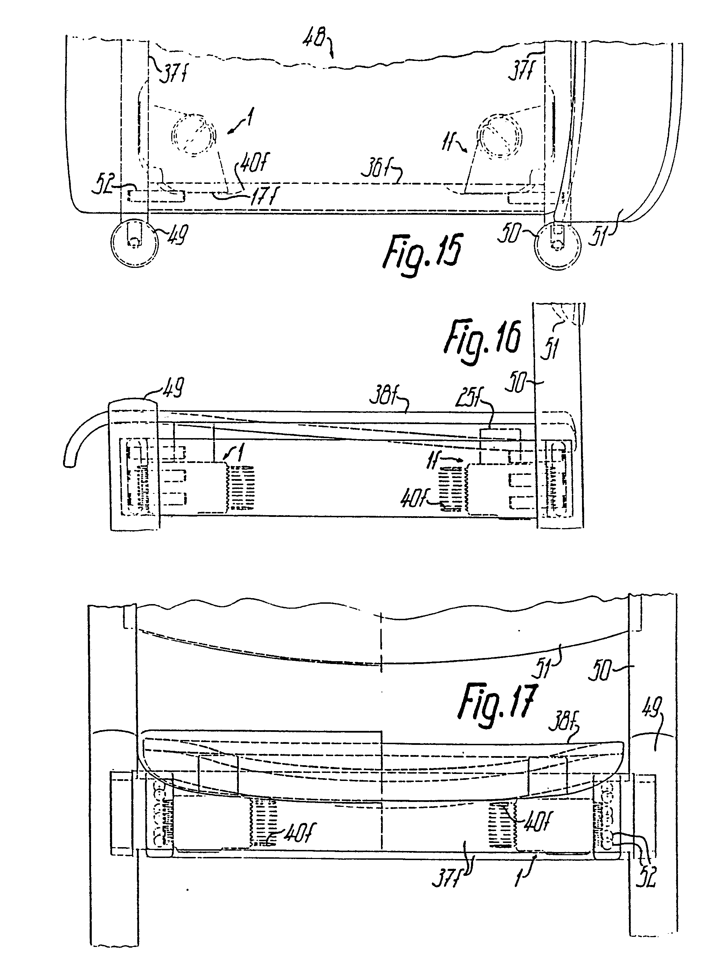

Wie die Figuren 13 und 14 zeigen, kann das Reihenverbindungsglied 42e auch um die Mittelachse 26e drehbar auf dem Distanzglied 25e gelagert sein. Zu diesem Zweck weist der Radialarm 43e am zugehörigen Ende eine Nabe 46 auf, welche auf dem Außenumfang des Distanzgliedes 25e drehbar angeordnet ist und beispielsweise eine solche Umfangskontur aufweist, daß sie in der Reihenverbindungsstellung mit einer durch ihren Außenumfang gebildeten, exzentrischen Anschlagfläche 47 an der Innenfläche der rechtwinklig zum Radialarm 36e liegenden Zarge 36e anliegt; die Anschlagfläche 47 liegt in dieser Stellung in der Ebene der zugehörigen Anschlußfläche, und das Reihenverbindungsglied 42e kann aus dieser Stellung nur nach einer Richtung, nämlich von der benachbarten weiteren Zarge 37e weg, in das Möbel bzw. unter den aufliegenden Möbelteil geschwenkt werden. Eine Zwischenstellung dieser Schwenkbewegung ist in Fig. 14 strichpunktiert angedeutet. Durch diese Ausbildung, bei welcher das Reihenverbindungsglied 42e in der Höhenlage durch Auflage des Radialarmes 43e auf der Oberkante der Zarge 36e geführt ist, die Nabe 46 also eine gegenüber der Höhe des Distanzgliedes 25e hinreichend geringere Höhe aufweist, kann das Distanzglied 42e im Nichtgebrauchsfall vollständig innerhalb die lotrechte Projektion des Möbels geschwenkt werden. In Reihenverbindungsstellung ist der Abstand des Reihenverbindungsgliedes 42e von der Unterseite des aufliegenden Möbelteiles 38e kleiner als die Höhe des Anschlußsteckers 44e, so daß keine Gefahr besteht, daß der Anschlußstecker 44e durch Höhenverschiebungen der Nabe 46 auf dem Distanzglied 25e außer Eingriff kommt.

In den Figuren 15 bis 17 ist ein Stuhl 48 dargestellt, der vier zylindrisch ausgebildete, beispielsweise mit Bodengleitern versehene Standbeine 49, 50 aus Holz, Rohr oder dgl., zwei Seitenzargen 36f, zwei Querzargen 37f, einen Sitzteil 38f und eine Rückenlehne 51 aufweist. Die unterhalb des Sitzteiles 38f liegenden Zargen 36f, 37f sind an den vier Ecken des durch sie gebildeten Zargenrahmens jeweils mit einem Verbinder 1 bzw. 1f miteinander verbunden, wobei die beiden hinteren Verbinder 1f Distanzglieder 25f von z. B. geringerer Höhe als die vorderen Verbinder 1 aufweisen. Die seitlichen Zargen 36f stoßen mit ihren Endflächen an die Innenflächen der Querzargen 37f und sind gegenüber diesen zusätzlich durch mehrere, im dargestellten Ausführungsbeispiel jeweils drei übereinander liegende Dübel 52 gesichert, welche in Längsrichtung der Seitenzargen 36f liegen, in miteinander fluchtende Sacklochbohrungen der beiden jeweils aneinander stoßenden Zargen 36f, 37f eingreifen und etwa in der Mitte der Breite der Seitenzargen 36f liegen. Die Dübelzapfen 52 können so angeordnet sein, daß sie mit dem jeweils zugehörigen Endabschnitt in die Steckglieder 17f eingreifen, die ihrerseits in die zugehörige Seitenzarge 36f eingreifen. Dies wird zweckmäßig dadurch erreicht, daß die Dübelzapfen 52 in die jeweilige Seitenzarge 36f vor dem Einfräsen der Gegenglieder 40f bis in den Bereich eingesetzt werden, in welchem die Gegenglieder 40f hergestellt werden sollen. Danach werden die Gegenglieder 40f hergestellt, die dann auch teilweise durch die Dübelzapfen 52 gebildet werden, wonach die Zargen zusammengesetzt werden, so daß die Steckglieder 17f in die Dübelzapfen 52 eingreifen. In Fig. 17 ist links von der vetikalen Mittelebene eine gepolsterte Ausbildung des Sitzteiles und der Rückenlehne dargestellt, während es sich bei der Darstellung rechts von der vertikalen Mittelebene um einen Sitzteil 38f und eine Rückenlehne 51 aus Formholz in ungepolsterter Bauweise handelt. Im Falle der Befestigung vertikaler Panele oder dgl. wird zweckmäßig an Wand, Decke und Fußboden eines Raumes ein Zargenrahmen befestigt, in dessen Ecken und/oder - im Falle der Befestigung mit vor einer Anschlußfläche - mit Abstand von dessen Ecken Verbinder so befestigt werden, daß ihre Distanzglieder horizontal, beispielsweise über die Vorderseite des Zargenrahmens, vorstehen und die Paneele tragen.

## Patentansprüche

1. Verbinder für unter einem Anschlußwinkel miteinander zu verbindende Bauteile (36, 37), insbesondere für Möbel bzw. zur Verleimung und/oder Versteifung, mit einem Grundkörper (2), der zwei im Anschlußwinkel von beispielsweise 90° zueinander stehende, zwischen einer Ober- und einer Unterseite (3, 4) des Grundkörpers (2) sich erstreckende und eine Eckzone (8) bestimmende Anschlußflächen (5) aufweist, die insbesondere zur Holzzargenbefestigung oder dgl. ausgebildet sind bzw. von denen mindestens eine Anschlußfläche (5) mit einer Mehrzahl von vorstehenden Formschluß-Steckgliedern (17) versehen ist, wobei der Grundkörper (2) an einer von der Eckzone (8) entfernten Seite eine Diagonalfläche (7) bildet, dadurch gekennzeichnet, daß über die Oberseite (3) des Grundkörpers (2) ein wenigstens teilweise einstückig mit diesem ausgebildetes Auflage-Distanzglied (25) vorsteht.

2. Verbinder nach Anspruch 1, dadurch gekennzeichnet, daß wenigstens eine Steckrichtung (Pfeil 23, 24) der Steckglieder (17) rechtwinklig und/oder parallel zur Breitenrichtung der jeweils zugehörigen Anschlußfläche (5) liegt und daß vorzugsweise die Steckglieder (17) durch Zinkenstege von Feinzinken, Schwalbenschwanzzinken, Dübelzapfen, Spreizdübel und/oder dgl. gebildet sind.

3. Verbinder nach Anspruch 1 oder 2, dadurch gekennzeichnet, daß die Steckglieder (17) im wesentlichen über die ganze Höhe (10) und/oder Breite (11) der jeweiligen Anschlußfläche (5), insbesondere annähernd gleichmäßig, verteilt sind und daß vorzugsweise diese Höhe (10) etwa in der Größenordnung der Breite (11) bzw. kleiner ist.

4. Verbinder nach einem der Ansprüche 1 bis 3, dadurch gekennzeichnet, daß alle gleichartigen Steckglieder (17 bzw. 17b) im wesentlichen gleich weit und/oder mehr als ein Zehntel der Höhe (10) bzw. der Breite (11) der Anschlußfläche (5) über diese vorstehen, wobei vorzugsweise die Steckglieder (17) im wesentlichen ununterbrochen über die Breite (11) der Anschlußfläche (5) durchgehen und/oder parallel zu deren Breitenrichtung liegen.

5. Verbinder nach einem der Ansprüche 1 bis 4, dadurch gekennzeichnet, daß die Steckglieder (17) und/oder die Lücken (18) zwischen diesen jeweils zum Scheitel (20) im Querschnitt verjüngt sind, daß insbesondere die Dicke der Steckglieder (17) etwa Gleich der Breite der Lücken (18) ist und daß vorzugsweise die Lücken (18) gleiche, um 180° verdrehte Querschnitte wie die Steckglieder (17) aufweisen.

6. Verbinder nach einem der Ansprüche 1 bis 5, dadurch gekennzeichnet, daß die Steckglieder (17) und/oder mindestens eine Anschlußfläche (5) im Bereich der, insbesondere einspringend ausgebildeten, Eckzone (8) des Grundkörpers (2) im Abstand von der gedachten Schnittlinie (9) der Ebenen (6) der beiden Anschlußflächen (5) liegen und/oder daß die Steckglieder (17) mit zunehmender Annäherung an diese Schnittlinie (9) in ihrer zur zugehörigen Anschlußfläche (5) rechtwinkligen Höhe abnehmen, wobei vorzugsweise die Steckglieder (17) der jeweiligen Anschlußfläche (5) an ihren zur Eckzone (8) benachbarten Enden bzw. Begrenzungsflächen mit einer über die Höhe (10) der Anschlußfläche (5) durchgehenden gemeinsamen Abschrägung (19) versehen sind, die insbesondere in das zugehörige Ende (12) der Anschlußfläche (5) übergeht und/oder flacher als 45° geneigt ist.

7. Verbinder nach einem der Ansprüche 1 bis 6, dadurch gekennzeichnet, daß die Steckglieder (17) an dem von der Eckzone (8) entfernten Ende (21) der jeweiligen Anschlußfläche (5) bis an die anschließende Diagonalfläche (7), insbesondere mit in deren Anschlußebene liegenden Begrenzungsflächen (22) reichen und/oder daß die Diagonalfläche (7) an die jeweilige Anschlußfläche (5) unter einem Winkel anschließt, der größer als 45° ist, wobei die beiden, beiderseits des Distanzgliedes (25) liegenden Abschnitte (14) der Diagonalfläche (7) vorzugsweise tangential in den von der Eckzone (8) abgekehrten Teil der Umfangsfläche (30) des Distanzgliedes (25) übergehen.

8. Verbinder nach einem der Ansprüche 1 bis 7, dadurch gekennzeichnet, daß die Diagonalfläche (7) etwa rechtwinklig und/oder symmetrisch zur Mittelebene (16) zwischen den Anschlußflächen (5) annähernd von der Oberseite (3) des Grundkörpers (2) zu dessen Unterseite (4) und annähernd bis zur Unterseite (4) reichend abgeschrägt ist, wobei die Abschrägung (15) im unteren Bereich vorzugsweise annähernd bis an die Anschlußflächen (5) und/oder die der Eckzone (8) zugekehrte Mantellinie des Distanzgliedes (25) reicht.

9. Verbinder nach einem der Ansprüche 1 bis 8, dadurch gekennzeichnet, daß die der Eckzone (8) zugekehrte Mantellinie des Distanzgliedes (25) einen Abstand (33) von der Schnittlinie (9) der Ebenen (6) der Anschlußflächen (5) aufweist, der größer als die Hälfte des Abstandes (34) der entfernten Enden (21) der Anschlußflächen (5) und/oder der zugehörigen Begrenzungsflächen (22) der Steckglieder (17) von dieser Schnittlinie (9), insbesondere gegenüber diesem Abstand (34) nur geringfügig kleiner ist und/oder daß das, insbesondere im wesentlichen achssymmetrische, Distanzglied (25) in Richtung dieses Abstandes (33) ein Querschnittsmaß (27) aufweist, das in der Größenordnung dieses Abstandes (33) liegt.

10. Verbinder nach einem der Ansprüche 1 bis 9, dadurch gekennzeichnet, daß das, insbesondere etwa zylindrische, Distanzglied (25) etwa um die Höhe (10) der Anschlußflächen (5) bzw. etwa um seinen Durchmesser über die Oberseite (3) des Grundkörpers (2) vorsteht und/oder daß an der Unterseite (4) des Grundkörpers (2) ein, vorzugsweise annähernd deren ganze Fläche einnehmendes Stapelauflager (31) in Form eines flachen Vorsprunges vorgesehen ist.

11. Verbinder nach einem der Ansprüche 1 bis 10, dadurch gekennzeichnet, daß das Distanzglied am oberen Ende bzw. an einem wenigstens über einen Teil seiner Höhe reichenden Längsabschnitt mindestens ein Befestigungsglied, wie eine Schraubendurchgangsbohrung (41c), einen Krallenzapfen (41), Löcher für einen nietförmigen Klebstoffdurchtritt, eine Umfangsringverzahnung o.dgl. aufweist, das vorzugsweise in der zur Schnittlinie (9) der Ebenen (6) der Anschlußflächen (5) parallelen Mittelachse (26c, 26a) des Distanzgliedes (25c, 25a) liegt.

12. Verbinder nach einem der Ansprüche 1 bis 11, dadurch gekennzeichnet, daß die Oberfläche mindestens eines Steckgliedes (17) und/oder mindestens einer Anschlußfläche (5) wenigstens teilweise als Klebehaftfläche erhöhter Rauhigkeit ausgebildet ist.

13. Verbinder nach einem der Ansprüche 1 bis 12, dadurch gekennzeichnet, daß er zur Verbindung benachbarter Möbel, beispielsweise einer Reihenbestuhlung, ein Reihenverbindungsglied (42e) trägt, das vorzugsweise durch einen Radialarm (43e) des Distanzgliedes (25e) gebildet ist, der beispielsweise drehbar auf dem Distanzglied (25e) gelagert ist und am freien Ende für ein benachbartes Möbel einen Anschlußstecker (44e) mit parallel zur Mittelachse (26e) des Distanzgliedes liegender Steckrichtung aufweist.

14. Verbinder nach einem der Ansprüche 1 bis 11, dadurch gekennzeichnet, daß er als einstückiger, verrippter Hohlkörper aus Kunsstoff, Druckguß o. dgl. ausgebildet ist, wobei vorzugsweise der Grundkörper (2) im wesentlichen nach oben und das den Grundkörper (2) wenigstens annähernd über seine Höhe durchsetzende Distanzglied (25) an der Unterseite offen sind.

**Claims**

1. Connecting means for components (36, 37) to be interconnected under a connecting angle and in particular for furniture or for gluing and/or reinforcement, with a basic member (2) having two connecting surfaces (5) at a connecting angle of e.g. 90° to one another, extending between a top surface and a bottom surface (3, 4) of the basic member and defining a corner zone (8), said connecting surfaces being in particular constructed for wooden frame fastening or the like, or whereof at least one connecting surface (5) is provided with a plurality of projecting positive plug-in members (17), the basic member (2) forming a diagonal surface (7) on a side remote from the corner zone (8), characterized in that a support spacing member (25) projects over the top surface (3) of the basic member (2) and is constructed at least in part therewith.

2. Connecting means according to claim 1, characterized in that at least one plug-in direction (arrow 23, 24) of the plug-in members (17) is at right angles and/or parallel to the width direction of the associated connecting surface (5) and that preferably the plug-in members (17) are formed by prong webs of fine prongs, dovetail prongs, dowel pins, straddling dowels and the like.

3. Connecting means according to claims 1 or 2, characterized in that the plug-in members (17) are distributed, particularly in an approximately uniform manner over the entire height (10) and/or width (11) of the connecting surface (5) and that preferably said height (10) is approximately of the same order of magnitude as the width (11) or is smaller.

4. Connecting means according to one of the claims 1 to 3, characterized in that all the similar plug-in members (17 or 17b) project substantially identically far and/or more than one tenth of the height (10) or the width (11) of the connecting surface (5) over the latter and preferably the plug-in members (17) are located substantially uninterruptedly over the width (11) of the connecting surface (5) and/or are parallel to the width direction thereof.

5. Connecting means according to one of the claims 1 to 4, characterized in that the plug-in members (17) and/or the gaps (18) between them are in each case tapered in cross-section towards the apex (20), that in particular the thickness of the plug-in members (17) is approximately the same as the width of the gaps (18) and that preferably the gaps (18) have the same cross-sections, turned by 180°, as the plug-in members (17).

6. Connecting means according to one of the claims 1 to 5, characterized in that the plug-in members (17) and/or at least one connecting surface (5) are located in the vicinity of the, in particular re-entrant corner zone (8) of the basic member (2) at a distance from the imaginary intersection lines (9) of the planes (6) of the two connecting surfaces (5) and/or that the plug-in members (17) with increasing proximity to said intersection line (9) decrease in their right-angled height to the associated connecting surface (5) and preferably the plug-in members (17) of the particular connecting surface (5) are provided at their ends or boundary surfaces adjacent to the corner zone (8) with a common chamfer (19) passing over the height (10) of connecting surface (5) and which in particular passes into the associated end (12) of connecting surface (5) and/or is inclined flatter than 45°.

7. Connecting means according to one of the claims 1 to 6, characterized in that the plug-in members (17) at the end (21) of the particular connecting surface (5) remote from corner zone (8) extend up to the following diagonal surface (7), particularly with boundary surfaces (22) located in said connection plane and/or that the diagonal surface (7) is connected to the particular connecting surface (5) under an angle which is larger than 45°, the two portions (14) of the diagonal surface (7) located on either side of spacing members (25) pass preferably tangentially into the part of the circumferential surface (30) of spacing member (25) remote from corner zone (8).

8. Connecting means according to one of the claims 1 to 7, characterized in that the diagonal surface (7) is chamfered approximately at right angles and/or symmetrically to the median plane (16) between the connecting surface (5) extending approximately from the top surface (3) of basic member (2) to the bottom surface (4) thereof and approximately to the bottom surface (4), the chamfer (15) in the lower area extending preferably approximately to the connecting surface (5) and/or the circumferential line of the spacing member (25) facing corner zone (8).

9. Connecting means according to one of the claims 1 to 8, characterized in that the circumferential line of the spacing member (25) facing corner zone (8) has a distance (33) from intersection line (9) of the planes (6) of connecting surfaces (5) which is larger than half the spacing (34) of the remote ends (21) of the connecting surfaces (5) and/or the associated boundary surfaces (22) of said plug-in members (17) from said intersection line (9), and is in particular slightly smaller compared with said spacing (34) and/or that the in particular, substantially axially symmetrical spacing member (25) has in the direction of said spacing (33) a cross-sectional dimension (27) which is of the same order of magnitude as said spacing (33).

10. Connecting means according to one of the claims 1 to 9, characterized in that the in particular approximately cylindrical spacing member (25) projects over the top surface (3) of basic member (2) approximately by the height (10) of the connecting surfaces (5) or approximately by its diameter and/or that on the bottom surface (4) of basic member (2) is provided a stack support (31) in the form of a flat projection and which preferably approximately takes up its entire surface.

11. Connecting means according to one of the claims 1 to 10, characterized in that the spacing member at the upper end or on a longitudinal portion extending at least over part of its height has at least one fastening member, such as a screw through-bore (41c), a claw pin (41), holes for a rivet-like adhesive passage, a circumferential ring tooth system or the like, which is preferably located in the central axis (26c, 26a) of spacing member (25c, 25a) parallel to the intersection line (9) of planes (6) of connecting surfaces (5).

12. Connecting means according to one of the claims 1 to 11, characterized in that the surface of at least one plug-in member (17) and/or at least one connecting surface (5) is at least partly constructed as an adhesive surface with increased roughness.

13. Connecting means according to one of the claims 1 to 12, characterized in that for connecting adjacent furniture, e.g. rows of seats, it carries a series connecting member (42e), which is preferably formed by a radial arm (43e) of spacing member (25e), which is e.g. mounted in rotary manner on the spacing member (25e) and has at the free end a connecting pin (44e) with a plug-in direction parallel to the central axis (26e) of the spacing member for the purpose of an adjacent piece of furniture.

14. Connecting means according to one of the claims 1 to 11, characterized in that it is constructed as a one-piece, ribbed hollow body made from plastic, die cast metal or the like and preferably the basic member (2) substantially upwards and the spacing member (25) passing at least approximately over the height of basic member (2) are open at the bottom.

**Revendications**

1. Dispositif d'assemblage de parties constitutives (36, 37) devant être reliées et formant entre elles un angle de rattachement, destiné notamment à des meubles, respectivement, pour collage et/ou rigidification, présentant un corps de base (2) muni de deux surfaces de solidarisation (5) qui forment mutuellement un angle de rattachement mesurant par exemple 90°, s'étendent entre des faces supérieure et inférieure (3, 4) du corps de base (2), délimitent une zone d'angle (8) et sont en particulier réalisées en vue de la fixation de châssis en bois ou opération similaire, respectivement parmi lesquelles au moins une surface de solidarisation (5) est pourvue de multiples organes saillants (17) emboîtables par concordance de formes, le corps de base (2) formant une surface diagonale (7) sur un côté éloigné de la zone d'angle (8), caractérisé par le fait qu'un organe d'espacement (25) formant appui est en saillie au-delà de la face supérieure (3) du corps de base (2), avec lequel il est réalisé au moins partiellement d'un seul tenant.

2. Dispositif d'assemblage selon la revendication 1, caractérisé par le fait qu'au moins une direction d'emboîtement (flèche 23, 24) des organes emboîtables (17) s'étend perpendiculairement et/ou parallèlement au sens de la largeur de la surface de solidarisation (5) respectivement associée; et par le fait que les organes emboîtables (17) sont formés, de préférence, par des membrures de fourchons effilés, par des fourchons en queue d'aronde, des tenons de chevillage, des chevilles d'expansion et/ou éléments similaires.

3. Dispositif d'assemblage selon la revendication 1 ou 2, caractérisé par le fait que les organes emboîtables (17) sont notamment répartis de manière approximativement uniforme, pour l'essentiel sur toute la hauteur (10) et/ou la largeur (11) de la surface de solidarisation considérée (5); et par le fait que, de préférence, cette hauteur (10) est sensiblement du même ordre de grandeur, respectivement plus petite que la largeur (11).

4. Dispositif d'assemblage selon l'une des revendications 1 à 3, caractérisé par le fait que tous les organes emboîtables de même type (17, respectivement 17b) dépassent pour l'essentiel de la même distance et/ou de plus d'un dixième de la hauteur (10) respectivement de la largeur (11) de la surface de solidarisation (5) ces organes emboîtables (17) s'étendant de préférence d'un seul trait, pour l'essentiel sans interruption, sur la largeur (11) de la surface de solidarisation (5) et/ou parallèlement au sens de la largeur de celle-ci.

5. Dispositif d'assemblage selon l'une des revendications 1 à 4, caractérisé par le fait que les organes emboîtables (17) et/ou les lacunes (18) entre ces derniers décroissent respectivement de section vers le sommet (20) ; par le fait que notamment l'épaisseur des organes emboîtables (17) est sensiblement égale à la largeur des lacunes (18) ; et par le fait que les lacunes (18) présentent, de préférence, des sections identiques à celles des organes emboîtables (17) décalées de 180°.

6. Dispositif d'assemblage selon l'une des revendications 1 à 5, caractérisé par le fait que, au voisinage de la zone d'angle (8) du corps de base (2), réalisée en particulier avec décrochement vers l'intérieur, les organes emboîtables (17) et/ou au moins une surface de solidarisation (5) s'étendent à distance de la ligne imaginaire d'intersection (9) des plans (6) des deux surfaces de solidarisation (5) ; et/ou par le fait que la hauteur des organes emboîtables (17), perpendiculaire à la surface de solidarisation associée (5), diminue au fur et à mesure que lesdits organes se rapprochent de cette ligne d'intersection (9), les organes emboîtables (17) de la surface de solidarisation considérée (5) présentant de préférence, à leurs extrémités, respectivement sur leurs surfaces de délimitation voisines de la zone d'angle (8) un biseau commun (19) qui est ininterrompu sur la hauteur (10) de la surface de solidarisation (5) rejoint notamment l'extrémité associée (12) de la surface de solidarisation (5) et/ou est incliné de moins de 45°.

7. Dispositif d'assemblage selon l'une des revendications 1 à 6, caractérisé par le fait que, à l'extrémité (21) de la surface de solidarisation considérée (5), qui est éloignée de la zone d'angle (8) les organes emboîtables (17) s'étendent jusqu'à la surface diagonale attenante (7), en particulier par des surfaces de délimitation (22) situées dans leur plan de rattachement ; et/ou par le fait que la surface diagonale (7) se rattache à la surface de solidarisation considérée (5) selon un angle supérieur à 45°, les deux tronçons (14) de la surface diagonale (7) situés de part et d'autre de l'organe d'espacement (25) se rejoignat de préférence tangentiellemnt dans la partie de la surface périphérique (30) de l'organe d'espacement (25) qui est tournée à l'opposé de la zone d'angle (8).

8. Dispositif d'assemblage selon l'une des revendications 1 à 7, caractérisé par le fait que la surface diagonale (7) est inclinée à peu près perpendiculairement et/ou symétriquement au plan médian (16) situé entre les surfaces de solidarisation (5), en s'étendant approximativement de la face supérieure (3) du corps de base (2) vers la face inférieure (4) de ce dernier, et approximativement jusqu'à cette face inférieure (4) l'inclinaison (15) s'étendant de préférence, dans la région inférieure, approximativement jusqu'aux surfaces de solidarisation (5) et/ou jusqu'à la génératrice de l'organe d'espacement (25) qui est tournée vers la zone d'angle (8).

9. Dispositif d'assemblage selon l'une des revendications 1 à 8, caractérisé par le fait que la génératrice de l'organe d'espacement (25) qui est tournée vers la zone d'angle (8) présente, par rapport à la ligne d'intersection (9) des plans (6) des surfaces de solidarisation (5) une distance (33) qui est plus grande que la moitié de la distance (34) comprise entre cette ligne d'intersection (9) et les extrémités éloignées (21) des surfaces de solidarisation (5) et/ou les surfaces de délimitation associées (22) des organes emboîtables (17) et qui, en particulier, n'est que légèrement plus petite que cette distance (34) ; et/ou par le fait que l'organe d'espacement (25) en particulier sensiblement symétrique par rapport à l'axe, possède, dans la direction de cette distance (33) une dimension de section (27) qui est du même ordre de grandeur que ladite distance (33).

10. Dispositif d'assemblage selon l'une des revendications 1 à 9, caractérisé par le fait que l'organe d'espacement (25) en particulier sensiblement cylindrique fait saillie, au-delà de la face supérieure (3) du corps de base (2), d'environ la hauteur (10) des surfaces de solidarisation (5) respectivement d'environ son diamètre ; et/ou par le fait qu'il est prévu, à la face inférieure (4) du corps de base (2), une zone d'appui d'empilement (31) qui occupe, de préférence, approximativement toute la superficie de cette face et revêt la forme d'une protubérance aplatie.

11. Dispositif d'assemblage selon l'une des revendications 1 à 10, caractérisé par le fait que l'organe d'espacement présente, respectivement à l'extrémité supérieure ou sur un tronçon longitudinal s'étendant sur au moins une partie de sa hauteur, un élément de fixation tel qu'un forage (41c) de passage d'une vis, un tenon (41) à crampons, des trous pour le passage d'une masse de colle en forme de rivet, une denture annulaire périphérique ou élément similaire situé, de préférence, sur l'axe médian (26c, 26a) de l'organe d'espacement (25c, 25a), parallèle à la ligne d'intersection (9) des plans (6) des surfaces de solidarisation (5).

12. Dispositif d'assemblage selon l'une des revendications 1 à 11, caractérisé par le fait que la face supérieure d'au moins un organe emboîtable (17) et/ou d'au moins une surface de solidarisation (5) est réalisée, au moins partiellement, en tant que surface d'adhérence par collage, à rugosité accrue.

13. Dispositif d'assemblage selon l'une des revendications 1 à 12, caractérisé par le fait qu'il porte, en vue de l'assemblage de meubles voisins, par exemple d'un alignement de chaises, une pièce (42e) de solidarisation alignée formée, de préférence, par un bras radial (43e) de l'organe d'espacement (2se) qui est par exemple monté rotatif sur cet organe d'espacement (25e) et possède, à son extrémité libre, un organe (44e) de solidarisation par emboîtement qui est destiné à un meuble voisin et dont la direction d'emboîtement est parallèle à l'axe médian (26e) de l'organe d'espacement.

14. Dispositif d'assemblage selon l'une des revendications 1 à 11, caractérisé par le fait qu'il est réalisé sous la forme d'un corps creux monobloc strié en matière plastique, en un matériau moulé sous pression ou d'un type similaire, le corps de base (2) étant, de préférence, ouvert pour l'essentiel vers le haut, tandis que l'organe d'espacement (25), qui traverse ce corps de base (2) au moins approximativement sur sa hauteur, est ouvert à sa face inférieure.

Fig.1

Fig.2

Fig.3

Fig.4

Fig.5

Fig.6

2/4

Fig.7

36c  25  37c  38c
~1
40

Fig.8

38d  41
39a
53
25a
26a  1a

Fig.9

1b
5b  2b

Fig.10

41c  25c
1c
26c

3

Fig. 11

Fig.12

Fig.13

Fig.14

*Fig. 15*

*Fig. 16*

*Fig. 17*

7